# EUROPEAN PATENT APPLICATION

(11) **EP 2 703 339 A1**
(43) Date of publication of application: **05.03.2014**
(21) Application number: 12182996.4
(22) Date of filing: 04.09.2012
(51) Int. Cl.: C01B 3/36, C01B 3/38, B01J 19/00, F23D 14/22, F23D 14/48

(54) **Burner for the production of synthesis gas**

(71) Applicant: Casale Chemicals S.A., 6900 Lugano-Besso (CH)
(72) Inventor: Zanichelli, Luca, 20126 Milano (IT); Humair, Daniele, 6500 Bellinzona (CH)
(74) Representative: Zardi, Marco

(57) **Abstract**

A burner suitable for the over stoichiometric combustion of a hydrocarbon source, comprising a nozzle (2) for the formation of a diffusion flame outside the burner, and said nozzle (2) comprising one (20) or more (21, 22) tubular bodies which define a channel (25) or a plurality of coaxial channels (23, 24) for respective reactant streams, wherein the or each of the tubular bodies forming said nozzle (2) are made of a technical ceramic material.

## Description

### Field of the invention

The invention relates to a process burner for the production of a synthesis gas, particularly for processes involving the over-stoichiometric combustion of a hydrocarbon source, such as autothermal reforming or partial oxidation.

### Prior art

The production of several commodity chemicals, such as methanol, ammonia, synthetic gasoline, synthetic olefins, plastics etc. requires conversion of a hydrocarbon source into a synthesis gas. The hydrocarbon source is, for example, any of natural gas, naphtha, heavy oil, residues, coal, etc. Said synthesis gas is essentially a mixture of carbon monoxide and hydrogen.

Said conversion is generally carried out through steam reforming or over-stoichiometric combustion (OSC) of the hydrocarbon source. OSC is performed with over-stoichiometric amount of fuel, that is with defect of an oxidant which can be air or enriched air or pure oxygen. Historically, steam reforming has been preferred for processing light products such as natural gas or naphtha, while OSC has been preferred for the processing of heavier products such as heavy oil, residues, coal, etc.

The current trend for large capacity plants (e.g. large ammonia plants and methanol plants), however, leads to a more general application of OSC, including the processing of lighter hydrocarbon sources such as natural gas. The reason is that steam reforming becomes unpractical for large installations, due to limitation in size and operating pressure of the related equipments.

Hence, there is a growing interest in the over-stoichiometric combustion of hydrocarbon sources. Two common techniques for OSC are Autothermal Reforming (ATR) and Partial Oxidation (POX). ATR is typically used for natural gas and naphtha, while POX is typically used for natural gas, naphtha, heavy oil, residue and coal.

Both ATR and POX involve the over stoichiometric combustion of a hydrocarbon source with an oxidizer (oxygen, air or enriched air) with steam under pressure (2 to 150 bar gauge) within a refractory lined pressure vessel. Said steam can be mixed with either the hydrocarbon source or the oxidizer. The ATR features the presence of a catalytic bed and operating temperatures typically in the range 950 - 1050 °C at reactor outlet, and around 1200 °C at catalyst inlet. Partial oxidation is performed at higher temperatures (1300 - 1700 °C at the reactor outlet) and without catalyst.

A burner for the OSC of a hydrocarbon source comprises basically a body and a nozzle for the formation of a diffusion flame outside the burner and within said pressure vessel. For example, a process burner of an autothermal reformer is installed on top of the reformer and forms a diffusion flame in a combustion chamber of the reformer, which is situated over the catalytic bed.

The nozzle is designed to properly convey the oxidizer and the hydrocarbon source to form the diffusion flame in the pressure vessel. It should be noted that the flame and the combustion reactions take place outside the burner itself and within a combustion chamber. In this respect, the process burners for OSC differ from conventional burners for the generation of heat, wherein the combustion chamber is an integral part of the burner, the flame is created within the burner itself and only the hot combustion gases leave the burner.

The nozzle of the burner is exposed to a temperature around 1000 °C or above. In order to cope with such a high temperature, the current burners for OSC are made of high temperature metal alloys (e.g. Ni-Cr-Fe alloys such as incoloy, inconel or hastelloy), and usually have a double-walled structure allowing for circulation of a cooling medium inside the nozzle. Generally, the cooling medium is water under pressure.

A water-cooled burner, however, has a number of drawbacks.

A first drawback is that water cooling adds a considerable amount of complication to the burner design, including: sliding sealing, welding and machining of complicated geometries, since a closed path for the circulation of the cooling water has to be created in the region of the nozzle tip.

Another drawback is that the nozzle must be designed with a considerable wall thickness, typically in the range 10 to 20 mm, to bear a pressure difference between inside and outside. Such wall thickness, however, tends to increase the thermal stress.

More particularly, a water-cooled nozzle is basically a hollow body with an outer side exposed to the pressure of the hot syngas, and an inner side exposed to the pressure of the cooling water. The pressure of the hot syngas is usually around 30 bar or higher during the normal operation. In some embodiments, the pressure of the cooling water is close to the pressure of the syngas, or even higher, for example the water pressure is 15 to 30 bar or greater. According to other embodiments, the pressure of the cooling water is significantly lower than pressure of the hot syngas, for example the pressure of the water is a few bars. Regardless of the choice of the water pressure, however, it happens that the nozzle is stressed by a relevant pressure difference between inside and outside.

With a high-pressure water cooling system, the pressure of the syngas can be balanced by the pressure of water during normal operation; the burner however is stressed during start-up and shutdown phases, when pressure on the syngas side is low and the nozzle has to bear the pressure of the cooling water. A nozzle with a low-pressure water cooling, on the other hand, is stressed by the pressure of the syngas side during normal operation, when the balancing effect of the water is limited. In both cases, the nozzle must be designed with thick walls in order to withstand a relevant pressure (e.g. 15 or 30 bar) difference between inside and outside.

Adoption of such thick walls however is negative from the point of view of the thermal stress. Generally speaking, this is because temperature gradients through the cooled walls of the nozzle are directly proportional to the wall thickness, but higher temperature gradients mean higher thermal stress. In the extreme operating conditions of POX or ATR burners, the thermal stresses induce a local plasticization of the material on the hot side. Once the thermal stresses (temperature gradient) are removed, the plasticized region cannot recover its original shape and that results in thermal ratcheting and the formation of a fatigue crack.

Thermal stresses are present during normal operation and not when the plant is shut down, thus the normal sequence of start-up and shutdown of a typical of ATR/POX plant causes alternate cycles of thermal stresses that induce the formation of new cracks or the propagation of existing cracks at each thermal cycle (low cycle fatigue).

Since the thermal stresses, even in the best cooled burner, are extremely high, failure of the nozzle can take place in a relatively short time (several cycles).

In order to reduce the thermal stress and achieve an acceptable operating life, a thickness of a few millimeters would be desirable, especially in a burner for POX applications. The requirement for a small thickness, dictated by the thermal stresses, is however in direct contrast with the requirement of high thickness dictated by the pressure. To summarize: the main drawback of the cooling water system is related to the operating pressure. The higher the operating pressure, the higher the thickness of the metallic surfaces exposed to the hot gases/flame, the shorter the life of the burner due to the formation and propagation of cracks by thermal stresses.

The prior art water-cooled burners seek for a compromise which is not fully satisfactory. Despite the use of expensive hi-tech materials such as incoloy, inconel, etc. the burners for over-stoichiometric combustion, in particular for ATR and POX applications, are still the subject of frequent failures.

On the other hand, the water cooling has been deemed indispensable so far. A non-cooled burner with metallic tips would rapidly undergo local fusion or creep or, at least, failure due to low cycle fatigue.

The current high temperature alloys have a low thermal conductivity and are subject to a drastic reduction of yield strength at temperatures above 650 - 700 °C. Thermal conductivity controls the intensity of the thermal gradient (stresses), the lower the conductivity the higher the thermal stresses. The yield strength is the threshold between the elastic and plastic behavior of the material. Stresses above yield strength induce a permanent deformation, which means that the original condition is not recovered when the load is removed.

For all the above reasons, the problems posed by the design of a process burner, and its nozzles, for over stoichiometric combustion are still to be solved.

### Summary of the invention

The aim of the invention is to provide a novel process burner adapted to overcome the above problems.

This aim is reached with a burner suitable for the over stoichiometric combustion of a hydrocarbon source, the burner comprising a body and a nozzle associated to said body, said nozzle being arranged for the formation of a diffusion flame outside said process burner, and said nozzle comprising one or more tubular bodies which define a channel for a reactant stream, or a plurality of channels for respective reactant streams, the burner being **characterized in that** the tubular body or each of the tubular bodies forming said nozzle is/are made of a technical ceramic material.

The nozzle is intended as the part of the burner that confines the one or more reactant streams and delivers said stream(s) to a separated combustion chamber. Hence, the nozzle comprises one or more tubular bodies to define the passage(s) for the reactant streams. Said tubular bodies are preferably cylindrical or conical but may have other shapes. Said reactant streams may include one or more fuel or oxidant streams, or fuel mixed with oxidant. In some embodiments the nozzle may comprise a plurality of substantially coaxial tubular bodies in order to provide multiple channels for reactant streams. When more than one reactant stream is present, the reactant streams may have the same or a different composition.

The tubular body or each of the tubular bodies forming the nozzle is (are) preferably made in a single piece, thus having a monolithic structure.

The burner is usually installed within a refractory lining which comprises an opening. Preferably, said ceramic nozzle has an outlet section which substantially correspond to said opening in the refractory lining, that is to say, the ceramic nozzle is not protruding away from the refractory lining.

The referred technical ceramics are inorganic and non-metallic materials. For example, they can be shaped from a mass of raw material, preferably at room temperature, and then subjected to a high temperature firing process (sintering).

Said technical ceramic material is preferably selected with a high thermal conductivity and a high mechanical strength. Preferably the ceramic material has a thermal conductivity of at least 10 W/(m K), and more preferably of at least 25 W/(m K). Preferably the elastic modulus is at least 40 GPa.

More preferably, the thermal conductivity of said ceramic material is in the range 10 to 230 W/(m K), and even more preferably in the range 25 to 160 W/(m K). The elastic modulus is preferably in the range 40 to 450 GPa, and more preferably between 200 and 360 GPa.

Preferably, the ceramic material has also a low porosity. According to preferred embodiments, said technical ceramic material has a porosity between 0 and 50% in volume, and more preferably between 0 and 10% in volume.

The density of said ceramic material is preferably between 1000 and 6000 kg/m³, and more preferably between 2000 and 5000 kg/m³.

Technical ceramics suitable for the invention include silicate ceramics, oxide ceramics and non-oxide ceramics. More in detail, suitable oxide ceramics include:
- oxide ceramics which are principally composed of a single phase and a single metal oxide (e.g. in a concentration greater than 90%);
- multi-material oxide ceramics, which are substantially a mixture of oxide ceramics;
- dispersion ceramics, which include a matrix and a dispersed phase.

Examples of the technical ceramic materials for the invention are now presented with a greater detail.

Silicate ceramics are polyphase materials; their major components are usually clay, kaolin, feldspar and soapstone as silicate sources. Additionally, components as alumina and zircon may be used to achieve special properties such as higher strength. During the sintering process, a glass phase material is formed in addition to the crystalline phases. Said glass phase may be around 20% and comprises silicon dioxide (SiO₂) as the major component

Oxide ceramics are principally composed of a single phase and a single metal oxides or a mixture of metal oxides. They have little or no glass phase. The raw materials are synthetic products with a high purity. At very high sintering temperatures, a uniform microstructure is created which is responsible for their good properties.

Preferred technical oxide ceramics for the invention are aluminum oxide, silicon oxides, magnesium oxide, zirconium oxide, titanium dioxide, yttrium oxides and boron oxides. Preferred multi-material oxide ceramics are mixtures of oxide ceramics, such as for example, alumina zirconia and yttrium oxide mixtures, aluminium titanate (Al₂O₃ + TiO₂) and lead zirconium titanate (Pb[Zr_{X}Ti_{1-X}]O₃, 0 ≤ x ≤ 1).

An additional class of oxide ceramics are dispersion ceramics. Preferably both the matrix and the dispersed phase are ceramic materials. A preferred dispersion ceramic for the invention is aluminium oxide reinforced with zirconium oxide.

Non-oxide ceramics include ceramic materials based on compounds of boron, carbon, nitrogen and silicon. Furthermore, non-oxide ceramics usually contain a high proportion of covalent compounds. This allows their use at very high temperatures, results in a very high elastic modulus, and provides high strength and hardness combined with excellent resistance to corrosion and wear. Preferred non-oxide ceramics are silicon carbide, silicon nitride, aluminium nitride, boron carbide and boron nitride.

The applicant has found that technical ceramics with a low porosity, a high thermal conductivity and a high mechanical strength are best suited for the process burners for OSC of hydrocarbon sources, in particular for POX reactor and autothermal reformers.

Said technical ceramics have a thermal conductivity that is 3 to 10 times higher than that of the best alloys for high temperature applications, and a mechanical strength practically independent from temperature and about 2 to 10 times higher than that of metals at temperature above 700 °C.

The above properties make technical ceramic advantageous for construction of ATR/POX burners, since the high thermal conductivity reduces the thermal gradient and thus the thermal stresses for a given set of operating conditions. Also the high mechanical strength of these materials allows them to withstand thermal gradient that would destroy a metallic tip in a few cycles. Hence, the invention has the main advantage of increasing the operating life of the burner. Another advantage is that the burner can be made with a non-cooled design, i.e. without hollow parts for circulation of a cooling medium. The burner is not stressed by difference of pressure between the cooling medium and the outside gas, and construction is much simpler compared to a water-cooled burner.

The body of the burner can be made of said technical ceramics. However, due to cost and limited machinability of said technical ceramics, some embodiments provide that the body of the burner is made with a metallic material such as stainless steel or a high temperature alloy, and only the nozzle is made of said technical ceramics. In such cases, a junction between a metal part and the ceramic nozzle must be provided. Said junction can be made, for example, with a flanged connections or a threaded joint. In some preferred embodiments, the junction is gasket-free. Preferred gasket-free connections include for example: metallization of the ceramic and brazing of metalized layer on the metallic parts of the burner, or a cemented connection.

The nozzle of the burner can be made of a single part or may include more parts, for example if the burner comprises two or more coaxial elements.

Other aspects of the invention are: a device for OSC of a hydrocarbon source, such a POX reformer of ATR; the revamping of an existing device by means of replacement of a conventional burner with the inventive burner.

The features and advantages of the invention will be more evident with the help of the following detailed description.

### Description of the figures

Fig. 1 is a sectional view of a process burner according to an embodiment of the invention.
Fig. 2 is a sectional view of a process burner according to another embodiment of the invention.
Figs. 3 to 6 are examples of a joint between a metal body and a ceramic nozzle of a burner, according to various embodiments.
Fig. 7 illustrates the burner of Fig. 1 when mounted in a reactor.

### Detailed description of preferred embodiments

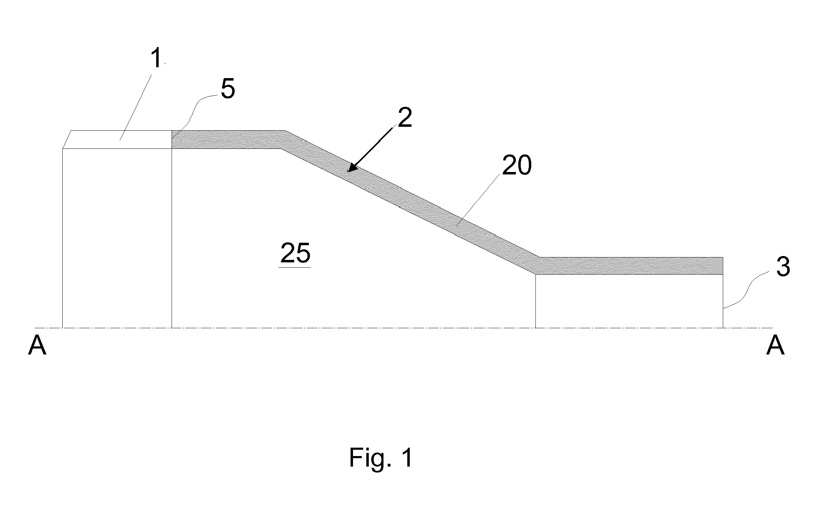

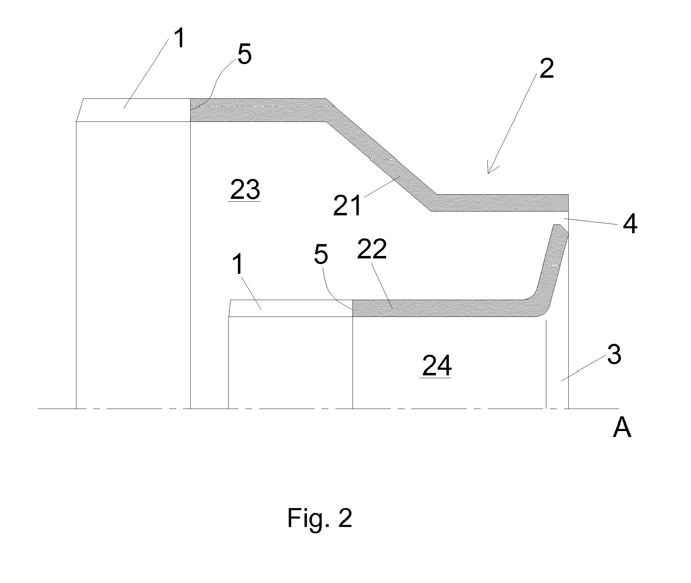

Figs. 1 and 2 show embodiments of a non-cooled process burner comprising essentially a metal body 1 and a ceramic nozzle 2. The metal body 1 is made of stainless steel or of a high temperature alloy, while the nozzle 2 is made of a technical ceramic material.

The burner is preferably a substantially cylindrical body with axis A-A, as shown. The burner is a non-cooled burner having no internal chambers for the circulation of a cooling medium.

In use, a diffusion flame is formed outside the process burner, downstream of the exit section 3. For example said flame is formed in the combustion chamber of a POX or ATR reactor, to which the burner is mounted.

The nozzle 2 comprises one or more tubular bodies which define a channel, or a plurality of coaxial channels, for a reactant stream or a plurality thereof.

Fig. 1 shows an embodiment which is particularly suitable for use in an ATR, wherein the nozzle 2 comprises a single tubular body 20, thus delimiting a single channel 25 for a reactant stream. In this particular embodiment, the tubular body 20 has a first cylindrical part, proximal to the metal body 1, and a second cylindrical part proximal to the exit section 3, and said parts are joined by a conical part.

Fig. 2 shows an embodiment which is particularly suitable for use in a POX reactor, wherein the nozzle 2 include two tubular bodies 21, 22 which form two coaxial passages 23, 24 and two exit sections 3, 4 for reactant streams, e.g. a fuel gas and an oxidant. Hence the nozzle 2 shall be intended to encompass a single part or a plurality of parts, according to various embodiments of the invention. In Fig. 2 also the body 1 of the burner includes two coaxial parts, to which the ceramic bodies 21, 22 are connected respectively.

It shall be noted that each tubular bodies of the nozzle 2, namely the tubular body 20 according to Fig. 1 or bodies 21, 22 according to Fig. 2, are made preferably in a single piece and they are integrally made of said technical ceramic material.

Said technical ceramic material is for example an oxide such as aluminum oxide, silicon oxide, magnesium oxide, zirconium oxide, titanium dioxide, boron oxides, or a non-oxide such as silicon carbide, silicon nitride, aluminium nitride, boron carbide and boron nitride, etc.

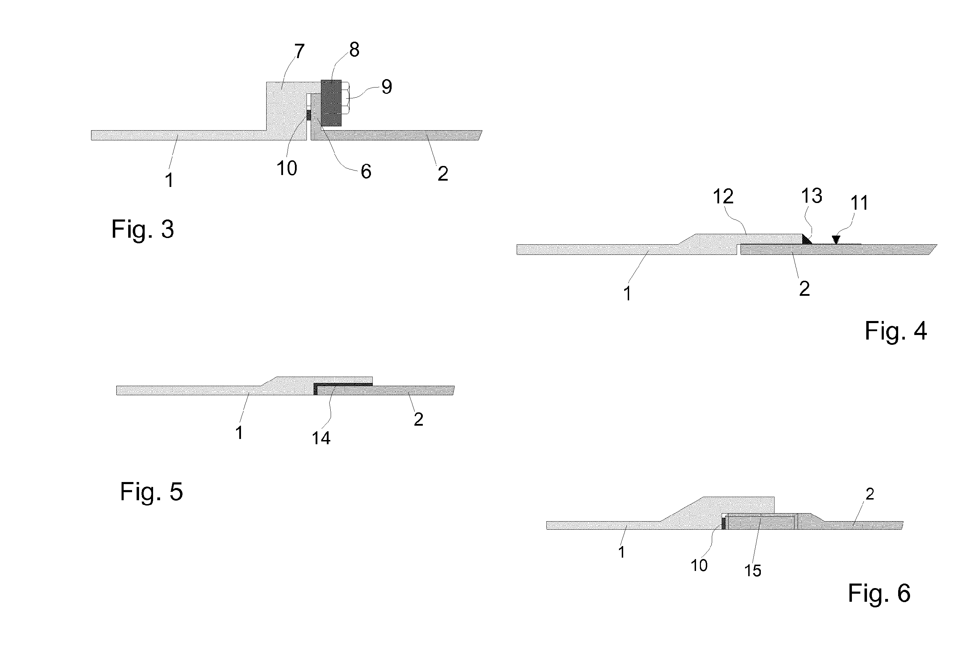

In the shown embodiments, the body 1 of the burner is made of metal, for example stainless steel or a high-temperature alloy. Hence the burner comprises metal-to-ceramic joints 5 between body 1 and a part of the nozzle 2. Figs. 3 to 6 show some preferred embodiments of said joints 5.

Fig. 3 discloses a flanged joint. The ceramic nozzle 2 is provided with a lap 6 which is fixed to a flange 7 of the metal body 1 of the burner by means of a floating flange 8 and a number of screws 9. A gasket 10 between the body 1 and the ceramic nozzle 2 prevents leakages of fuel gas or oxygen.

Fig. 4 discloses a brazed joint. The ceramic nozzle 2 comprises a metalized layer 11 which can be realized with a "per se conventional" technique, such as vacuum deposition process at high temperature. The metal body 1 forms an enlarged end seat 12 adapted to receive the nozzle 2. The nozzle 2 is made integral with the body 1 by means of a brazing 13 between the edge of the end seat 12 and the metalized layer 11. Said brazing 13 can be made with well-known techniques. Said connection between the body 1 and the nozzle 2 is tight and no gasket is required.

Fig. 5 shows an embodiment where the ceramic nozzle 2 is connected to the metal body 1 using a suitable cement 14. Preferably said cement 14 is based on alumina. After curing, the cement 14 provides a permanent joint between the ceramic material of nozzle 2 and the metal of the body 1. As in Fig. 4, the connection is tight and no gasket is required.

Fig. 6 shows an embodiment with a threaded connection 15. Threads can be obtained by machining the ceramic nozzle 2 as well as the body 1, allowing for a simple and effective connection. Since no sealing can be guaranteed through a threaded connection, a gasket 10 (as in Fig. 3) is located between the two elements.

In other (not shown) embodiments, also the body 1 can be made of a technical ceramic, which means that the body 1 and nozzle 2 are integrally formed in a single piece of a ceramic material. The embodiments with a metal body 1 however can be preferred for saving costs, limiting the use of the technical ceramics only to the most stressed part of the burner, namely the nozzle 2.

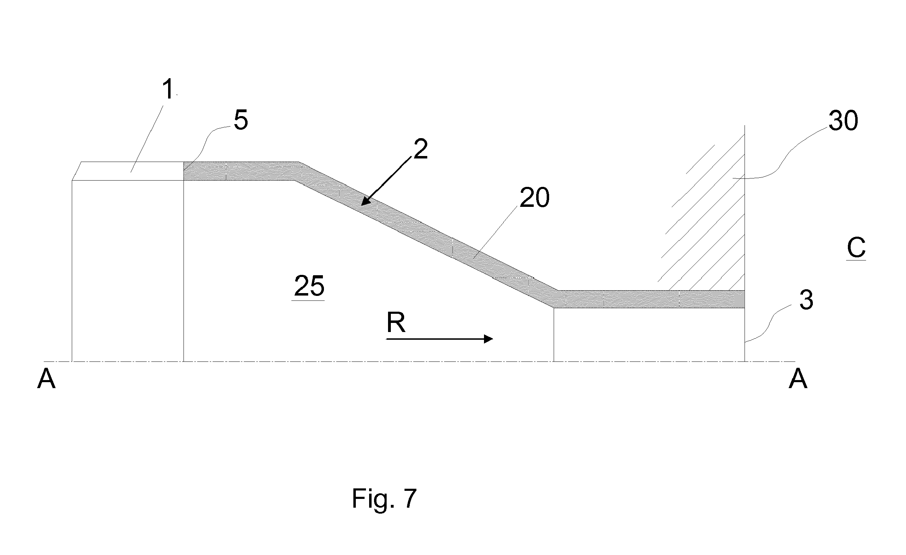

Fig. 7 illustrates a burner according to Fig. 1, when mounted in a device such as a POX or ATR reactor. In use, a reactant stream R (for example a mixture of fuel and air or oxygen) is delivered via the chamber 25 to a combustion chamber C, where a diffusion flame is formed. The burner is installed within a refractory lining 30 and, preferably, the ceramic nozzle 2 has an outlet section 3 which substantially correspond to an opening in the refractory lining towards the combustion chamber C, in such a way that the ceramic nozzle (2) does not protrude from the refractory lining. The same is applicable to other embodiments, such as the multi-channel embodiment of Fig. 2.

## Claims

1. A burner suitable for the over stoichiometric combustion of a hydrocarbon source, the burner comprising a body (1) and a nozzle (2) associated to said body, said nozzle (2) being arranged for the formation of a diffusion flame outside said process burner, and said nozzle (2) comprising one (20) or more (21, 22) tubular bodies which define a channel (25) for a reactant stream, or a plurality of coaxial channels (23, 24) for respective reactant streams, the burner being **characterized in that** the tubular body (20) or each of the tubular bodies (21, 22) forming said nozzle (2) is/are made of a technical ceramic material.

2. A burner according to any of the previous claims, wherein the tubular body (20) or each of the tubular bodies (21,22) forming said nozzle (2) is or are made in a single piece.

3. A burner according to claim 1 or 2, said technical ceramic material having a thermal conductivity of at least 10 W/(m K), and an elastic modulus of at least 40 GPa.

4. A burner according to claim 3, said technical ceramic material having at least one of the following properties:
- a thermal conductivity in the range 10 to 230 W/(m K), preferably in the range 25 to 160 W/(m K);
- an elastic modulus in the range 40 to 450 GPa, preferably between 200 and 360 GPa.

5. A burner according to any of the preceding claims, said technical ceramic material having a porosity between 0 and 50% in volume, preferably between 0 and 10% in volume.

6. A burner according to any of the preceding claims, said technical ceramic material having a density between 1000 and 6000 kg/m³, preferably between 2000 and 5000 kg/m³.

7. A burner according to any of the previous claims, said technical ceramic material being any of the following: a silicate ceramic; an oxide ceramic; a mixture of oxide ceramics; a dispersion ceramic; a non-oxide ceramic.

8. A burner according to claim 7, said technical ceramic material being a silicate ceramic including at least one of clay, kaolin, feldspar, soapstone as silicate source(s), and optionally including alumina and/or zircon.

9. A burner according to claim 7, said technical ceramic material being an oxide ceramic selected among: aluminum oxide, silicon oxides, magnesium oxide, zirconium oxide, titanium dioxide, yttrium oxide and boron oxides.

10. A burner according to claim 7, said technical ceramic material being a mixture of oxide ceramics, said mixture being a alumina zirconia and yttrium oxide mixture, aluminium titanate (Al₂O₃ + TiO₂) or lead zirconium titanate having the formula Pb [Zr_{X}Ti₁₋ₓ]O₃, wherein 0 ≤ x ≤ 1.

11. A burner according to claim 7, said technical ceramic material being a dispersion ceramic comprising a ceramic matrix and a dispersed ceramic phase, said material being preferably aluminium oxide reinforced with zirconium oxide.

12. A burner according to claim 7, said technical ceramic material being a non-oxide ceramics based on compounds of boron, carbon, nitrogen and silicon, and more preferably being selected among: silicon carbide, silicon nitride, aluminium nitride, boron carbide and boron nitride.

13. A burner according to any of the previous claims, said technical ceramic material being obtained from a mass of raw material, preferably at room temperature, which is subjected to a sintering process.

14. A burner according to any of the previous claims, wherein the body (1) is made of metal and the burner includes a metal-to-ceramic joint (5) between the body (1) and the nozzle (2).

15. A burner according to claim 14, said joint (5) being realized with one of the following:
- a flanged connection (6, 7, 8) or a threaded joint (15) between said metal body (1) and said nozzle (2) of the burner;
- providing a metalized layer (11) on the ceramic nozzle (2) and brazing said metalized layer to the metal body (1) of the burner;
- a cemented connection, providing a suitable cement (14) between said metal body (1) and said ceramic nozzle (2), said cement being preferably based on alumina.

16. A device for over-stoichiometric combustion of a hydrocarbon source, particularly a partial oxidation reformer or an autothermal reformer, comprising a burner according to any of the previous claims.

17. A device according to claim 16, the burner being installed within a refractory lining (30) and said ceramic nozzle (2) having an outlet section which substantially correspond to an opening in the refractory lining, in such a way that the ceramic nozzle (2) does not protrude from the refractory lining.

18. A method for revamping a device for over-stoichiometric combustion of a hydrocarbon source, particularly a partial oxidation reformer or an ATR reformer, said device comprising a burner, and the method comprising the replacement of said burner with a burner according to any of the previous claims.
